# EUROPÄISCHE PATENTANMELDUNG

(11) **EP 1 359 202 A1**
(43) Veröffentlichungstag der Anmeldung: **05.11.2003**
(21) Anmeldenummer: 02009923.0
(22) Anmeldetag: 03.05.2002
(51) Int. Cl.: C09J 175/00, C08L 63/00, C09K 3/10

(54) **Hitze-härtbare Epoxydharzzusammensetzung**

(71) Anmelder: Sika Schweiz AG, 8064 Zürich (CH)
(72) Erfinder: Kramer, Andreas, 8037 Zürich (CH)
(74) Vertreter: Isler, Jörg

(57) **Zusammenfassung**

Die vorliegende Erfindung betrifft Zusammensetzungen, welche mindestens ein Epoxidharz **A** mit durchschnittlich mehr als einer Epoxidgruppe pro Molekül; mindestens ein Epoxid-Addukt **B** mit durchschnittlich mehr als einer Epoxidgruppe pro Molekül; mindestens ein Thixotropiermittel **C**, auf Basis von Harnstoffderivat in einem nicht-diffundierenden Trägermaterial; und mindestens einen Härter **D** für Epoxidharze, welcher durch erhöhte Temperatur aktiviert wird, enthalten.

Gemäss bevorzugten Ausführungsformen sind weiterhin Zusammensetzung die zusätzlich noch mindestens eine Kern/Schalen-Polymer **E** und/oder Füllstoff **F** und/oder Reaktiwerdünner **G** enthalten.

Zusätzlich wird die Verwendung dieser Zusammensetzung als einkomponentiger Klebstoff sowie Verfahren der Herstellung der Zusammensetzung beschrieben.

Weiterhin wird die Verwendung des Thixotropiermittel **C** auf Basis von Harnstoffderivat in einem nicht-diffundierenden Trägermaterial als Mittel zur Erhöhung der Schlagzähigkeit beschrieben.

## Beschreibung

### Technisches Gebiet und Stand der Technik

Die Erfindung betrifft hitzehärtende Zusammensetzungen, welche sich durch eine gleichzeitige hohe Schlagzähigkeit und hohe Glasübergangstemperatur auszeichnen und insbesondere als einkomponentige Klebstoffe, eingesetzt werden können.

In der Fertigung sowohl von Fahrzeugen und Anbauteilen oder auch Maschinen und Geräten werden anstelle oder in Kombination mit herkömmlichen Fügeverfahren wie Nieten und Stanzen oder Schweissen immer häufiger hochwertige Klebstoffe eingesetzt. Dadurch entstehen Vorteile und neue Möglichkeiten in der Fertigung, beispielsweise die Fertigung von Verbund- und Hybridwerkstoffen oder auch grössere Freiheiten beim Design von Bauteilen. Die Klebstoffe müssen für eine Anwendung in der Fahrzeugherstellung gute Haftungen auf allen eingesetzten Untergründen, insbesondere elektrolytisch verzinkten, feuerverzinkten, und nachträglich phosphatierten Stahlblechen, beölten Stahlblechen sowie auf verschiedenen Aluminiumtypen aufweisen. Diese guten Haftungseigenschaften müssen besonders auch nach Alterung (Wechselklima, Salzsprühbad etc.) ohne grosse Qualitätseinbussen erhalten bleiben. Wenn die Klebstoffe als Rohbauklebstoffe eingesetzt werden, ist die Auswaschbeständigkeit dieser Klebstoffe von grosser Wichtigkeit, damit die Prozess-Sicherheit beim Hersteller garantiert werden kann.

Die Auswaschbeständigkeit kann mit oder ohne Vorgelierung erreicht werden. Für die Erreichung einer ausreichenden Auswaschbeständigkeit kann der Klebstoff pastös sein und in einem Rohbauofen innert kurzer Zeit oder mittels Induktionsheizung der Fügeteile vorgeliert werden.

Die Klebstoffe für den Rohbau müssen unter den üblichen Einbrennbedingungen von idealerweise 30 Min. bei 180°C aushärten. Des weiteren müssen sie aber auch bis circa 220°C beständig sein. Weitere Anforderungen für einen solchen gehärteten Klebstoff beziehungsweise der Verklebung sind die Gewährleistung der Betriebssicherheit sowohl bei hohen Temperaturen bis circa 85°C als auch bei tiefen Temperaturen bis circa -40°C. Da es sich bei diesen Klebstoffen um strukturelle Klebstoffe handelt und deshalb diese Klebstoffe strukturelle Teile verkleben, ist eine hohe Festigkeit des Klebstoff von grösster Wichtigkeit.

Herkömmliche Epoxidklebstoffe zeichnen sich durch eine hohe mechanische Festigkeit, insbesondere eine hohe Zugfestigkeit und hohe Zugscherfestigkeit auf. Bei schlagartiger Beanspruchung der Verklebung sind klassische Epoxidklebstoffe jedoch meist zu spröde und können deshalb unter Crashbedingungen, bei denen sowohl grosse Zug- als auch Schälbeanspruchungen auftreten, den Anforderungen insbesondere der Automobilindustrie bei weitem nicht genügen. Ebenfalls ungenügend sind auch die Festigkeiten bei hohen, insbesondere aber bei tiefen Temperaturen.

Es werden verschiedene Ansätze vorgeschlagen, um die Sprödigkeit der Epoxidklebstoffe bei schlagartiger Beanspruchung zu reduzieren. In der Literatur werden im Wesentlichen zwei Methoden vorgeschlagen, wie die Schlagzähigkeit von Epoxidklebstoffen verbessert werden kann. Einerseits kann das Ziel durch die Beimengung von zumindest teilvernetzten hochmolekularen Verbindungen wie Latices von Kern/Schale-Polymeren oder anderen flexibilisierenden Polymeren und Copolymeren erreicht werden. Andererseits kann auch durch Einführung von Weichsegmenten, z.B. durch die entsprechende Modifizierung der Epoxidkomponenten eine gewisse Zähigkeitserhöhung erreicht werden.

Entsprechend der erstgenannten Technik wird in US 5,290,857 und US 5,686,509 beschrieben, wie Epoxidharze schlagzäher gemacht werden können, indem ein feines, pulverförmiges Kern/Schalenpolymer in die Epoxidmatrix eingemischt wird. Dadurch entstehen in der hart-spröden Epoxidmatrix hochelastische Domänen, welche die Schlagzähigkeit erhöhen. Solche Kern/Schalenpolymere sind in US 5,290,857 basierend auf Acrylat- oder Methacrylat-polymere beschrieben. Ähnliche Zusammensetzungen beschreibt US 5,686,509 basierend auf ionisch vernetzten Polymerpartikeln, deren Kernpolymer aus vernetzten Dienmonomeren, das Schalen-Copolymer aus vernetzten Acryl-, Methacryl- und ungesättigten Carbonsäuremonomeren bestehen.

Entsprechend der zweitgenannten Technik werden in Patent US 4,952,645 Epoxidharz-Zusammensetzungen beschrieben, welche durch die Umsetzung mit aliphatischen, cycloaliphatischen oder aromatischen Carbonsäuren, insbesondere di- oder trimeren Fettsäuren, sowie mit aliphatischen oder cyclo-aliphatischen Diolen flexibilisiert wurden. Solche Zusammensetzungen sollen sich durch eine erhöhte Flexibilität insbesondere bei tiefen Temperaturen auszeichnen.

Ebenfalls bekannt ist die Modifizierung von Epoxidklebstoffen mittels Polyurethan-Epoxid-Addukten. Dabei werden die endständigen Isocyanatgruppen von Prepolymeren mit mindestens einem Epoxidharz umgesetzt, wobei ein bei Raumtemperatur fester Schmelzklebstoff erhalten wird. Diese Methode wird in EP 0 343 676 beschrieben.

Bekannt ist auch, dass Epoxidharze mit Elastomeren wie synthetischen Kautschuken und deren Derivaten flexibilisiert werden können. Der Haupteffekt beruht dabei auf der nur teilweisen Mischbarkeit der Epoxidharze und den entsprechenden derivatisierten synthetischen Kautschuken, wodurch beim Herstellprozess heterodisperse Phasen entstehen, welche einen den Kern/Schale-Polymeren vergleichbaren Effekt haben. Die Einstellung dieser Überstruktur ist sowohl von der mengenmässigen Zusammensetzung als auch von den Prozessführung während des Härtungsprozesses abhängig. In der dem Fachmann bekannten Literatur werden als besonders bevorzugte Ausgangsverbindungen für diese Flexibilisierungstechnik carboxylterminierte Poly-butadien-Acrylnitril-Copolymere beschrieben, welche mit Epoxidharzen umgesetzt werden. In US 5,278,257 und WO 0 037 554 werden Epoxidklebstoff-Formulierungen beschrieben, welche als Hauptkomponenten Addukte mit Epoxidendgruppen, hergestellt durch die Reaktion von Carboxylterminierten Butadien-Acrylnitriloder Butadien-Methacrylat-Verbindungnen (oder auch deren Styrolcopolymeren) mit Epoxidharzen, sowie phenol-terminierte Polyurethane bzw. Polyharnstoffe enthalten. Solche Klebstoffe können hohe Werte bei schälender, schlagender oder schlagschälender Beanspruchung aufweisen.

Generell ist ein grosser Nachteil des Standes der Technik, dass durch die Erhöhung der Schlagzähigkeit die Glasumwandlungstemperatur und/oder die Festigkeit der Klebstoffe reduziert wird, beziehungsweise dass durch die Erhöhung der Glasumwandlungstemperatur in der Regel zwar die Festigkeit erhöht wird, aber die Schlagzähigkeit sowie die Adhäsion und im speziellen die Schälfestigkeit reduziert wird. Dies beschränkt den Einsatz als strukturellen Rohbauklebstoff deshalb sehr stark, insbesondere weil äusserst hohe Anforderung an einen Crash-resistenten Klebstoff gestellt werden.

Weiterhin ist die Verwendung von Flüssigkautschuken dahin gehend sehr nachteilig, dass der Umfang der Phasenseparierung und damit auch die Verbesserung der Schlagzähigkeit sehr stark von den Herstellbeziehungsweise Aushärtungsbedingungen beeinflusst wird, was zu starken Schwankungen in den Eigenschaften führt.

### Aufgabe und Lösung

Es ist die Aufgabe der vorliegenden Erfindung, neue, bei Raumtemperatur stabile, einkomponentige hitzehärtende Zusammensetzungen, insbesondere Klebstoffe und Schmelzklebstoffe, bereitzustellen, welche einerseits eine hohe Festigkeit und andererseits eine hohe Glasübergangstemperatur, vorteilhaft eine solche von mindestens etwa 85°C, aufweisen. Dies wird insbesondere ohne Verwendung von Flüssigkautschuken und die damit verbundenen Abhängigkeiten von den Herstell- beziehungsweise von den Aushärtungsbedingungen erreicht.

Diese Eigenschaften sind besonders wichtig, um eine Verklebung auch im Falle eines Unfalls (Crash) zu gewährleisten und damit den modernsten Sicherheitsanforderungen im Fahrzeugbau zu entsprechen.

Überraschenderweise konnte dieses Ziel durch die erfindungsgemässe Zusammensetzung gemäss Anspruch 1 erfüllt werden. Insbesondere hat sich unerwarteterweise gezeigt, dass besonders durch den Einsatz eines Thixotropiermittels auf Basis von Harnstoffderivaten in einem nicht-diffundierendem Trägermaterial, wie es in Patentanmeldung EP 1 152 019 A1 beschrieben ist, eine äusserst starke Verbesserung der Schlagzähigkeit erreicht werden kann. Ebenfalls unerwartet war, dass das in Anspruch 1 verwendete, bezüglich Glasübergangstemperatur optimierte Epoxid-Addukt nicht die erwartete Verminderung in der Schlagzähigkeit bewirkte.

### Zusammenfassung der Erfindung

Die vorliegende Erfindung betrifft Zusammensetzungen, welche mindestens ein Epoxidharz **A** mit durchschnittlich mehr als einer Epoxidgruppe pro Molekül; mindestens ein Epoxid-Addukt **B** mit durchschnittlich mehr als einer Epoxidgruppe pro Molekül; mindestens ein Thixotropiermittel **C**, auf Basis von Harnstoffderivat in einem nicht-diffundierenden Trägermäterial; und mindestens einen Härter **D** für Epoxidharze, welcher durch erhöhte Temperatur aktiviert wird, enthalten.

Gemäss bevorzugten Ausführungsformen sind weiterhin Zusammensetzungen beschrieben, die zusätzlich noch mindestens ein Kern/Schalen-Polymer **E** und/oder mindestens einen Füllstoff **F** und/oder mindestens einen Reaktiwerdünner **G** enthalten.

Zusätzlich werden die Verwendung dieser Zusammensetzung als einkomponentiger Klebstoff sowie Verfahren der Herstellung der Zusammensetzung beschrieben.

Weiterhin wird die Verwendung des Thixotropiermittel **C** auf Basis von Harnstoffderivat in einem nicht-diffundierenden Trägermaterial als Mittel zur Erhöhung der Schlagzähigkeit beschrieben.

### Ausführliche Beschreibung der Erfindung

Die vorliegende Erfindung betrifft Zusammensetzungen, welche mindestens ein Epoxidharz **A** mit durchschnittlich mehr als einer Epoxidgruppe pro Molekül; mindestens ein Epoxid-Addukt **B** mit durchschnittlich mehr als einer Epoxidgruppe pro Molekül; mindestens ein Thixotropiermittel **C**, auf Basis von Harnstoffderivat in einem nicht-diffundierenden Trägermaterial und mindestens einen Härter **D** für Epoxidharze, welcher durch erhöhte Temperatur aktiviert wird, enthalten.

Das Epoxidharz **A** weist durchschnittlich mehr als eine Epoxidgruppe pro Molekül auf. Bevorzugt sind 2, 3 oder 4 Epoxidgruppen pro Molekül.. Vorzugsweise handelt es sich beim Epoxidharz **A** um ein Flüssigharz, insbesondere Diglycidylether von Bisphenol-A (DGEBA), vom Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Durch die Herstellungsverfahren dieser Harze bedingt, ist klar, dass in den Flüssigharzen auch höher molekulare Bestandteile enthalten sind. Solche Flüssigharze sind beispielsweise als Araldite GY 250, Araldite PY 304, Araldit GY 282 (Vantico) oder D.E.R 331 (Dow) erhältlich.

Das Epoxid-Addukt **B** ist ein Epoxid-Addukt des Typs **B1** und gegebenenfalls **B2**.

Das Epoxid-Addukt **B1** ist erhältlich durch die Reaktion mindestens einer Dicarbonsäure, bevorzugt mindestens einer dimeren Fettsäure, insbesondere mindestens einer dimeren C4 - C20 Fettsäure (entsprechend einer C8 - C40 Dicarbonsäure) mit mindestens einem Diglycidylether, insbesondere Bisphenol-A-Diglycidylether, Bisphenol-F-Diglycidylether oder Bisphenol-A/F-Diglycidylether. Das Epoxid-Addukt **B1** weist einen flexibilisierenden Charakter auf.

Das Epoxid-Addukt **B2** ist erhältlich durch die Reaktion von mindestens einem Bis(aminophenyl)sulfon-lsomeren oder mindestens eines aromatischen Alkohols mit mindestens einem Diglycidylether. Der aromatische Alkohol ist bevorzugt ausgewählt aus der Gruppe von 2,2-Bis(4-hydroxyphenyl)propan (=Bisphenol-A), Bis(4-hydroxyphenyl)methan (=Bisphenol-F), Bis(4-hydroxyphenyl)sulfon, Hydrochinon, Resorcin, Brenzkatechin, Naphthohydrochinon, Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan sowie alle Isomeren der vorgenannten Verbindungen. Die bevorzugten Bis(aminophenyl)sulfon-Isomeren sind Bis(4-aminophenyl)sulfon und Bis(3-aminophenyl)sulfon. Beim Diglycidylether handelt es sich insbesondere um Bisphenol-A-Diglycidylether, Bisphenol-F-Diglycidylether oder Bisphenol-A/F-Diglycidylether. Als besonders bevorzugter aromatischen Alkohol ist Bis(4-hydroxyphenyl)sulfon geeignet. Das Epoxid-Addukt **B2** weist eine eher starre Struktur auf.

In einer besonders bevorzugten Ausführungsform liegt als Epoxid-Addukt B als eine Kombination von Epoxid-Addukt **B1** und Epoxid-Addukt B2 vor.

Das Epoxid-Addukt **B** weist bevorzugt ein Molekulargewicht von 700-6000 g/mol, vorzugsweise 900 - 4000 g/mol, insbesondere 1000 - 3300 g/mol auf. Unter `Molekulargewicht' oder `Molgewicht' wird hier und im Folgenden das Molekulargewichtsmittel M_{w} verstanden.

Die Herstellung des Epoxid-Adduktes **B** erfolgt in der dem Fachmann bekannter Weise.

Vorteilhaft beträgt der Gesamtanteil von Epoxidharz **A** 12 - 50 Gewichts-%, vorzugsweise 17 - 45 Gewichts-%, bezogen auf die Gewichtsumme von **A+B.**

Unter ,Gesamtanteil' wird hier und im Folgenden jeweils die Summe aller zu dieser Kategorie gehörenden Bestandteile verstanden. Enthält beispielsweise eine Zusammensetzung 2 Epoxidharze **A**, so ist der Gesamtanteil die Summe dieser zwei Epoxidharze.

Weiterhin vorteilhaft beträgt der Gesamtanteil des Epoxidharz **A** und Epoxid-Addukt **B** in der Summe 20 - 70 Gewichts-%, vorzugsweise 35 - 65 Gewichts-%, bezogen auf das Gewicht der gesamten Zusammensetzung.

Für die Synthese des Epoxid-Adduktes kann ein dem Fachmann bekannter Katalysator verwendet werden, wie beispielsweise Triphenylphosphin.

Weiterhin enthält die Zusammensetzung mindestens ein Thixotropiermittel **C**, auf Basis von Harnstoffderivat in einem nicht-diffundierenden Trägermaterial. Vorteilhaft enthält dieses Thixotropiermittel **C** ein blockiertes Polyurethanpräpolymer als Trägermaterial. Die Herstellung von solchen Harnstoffderivaten und Trägermaterialien sind im Detail in der Patentanmeldung EP 1 152019A1 beschrieben.

Das Harnstoffderivat ist ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylen-diisocyanat (MDI) mit Butylamin erwiesen.

Vorteilhaft beträgt der Gesamtanteil des Thixotropiermittels **C** 5 - 40 Gewichts-%, vorzugsweise 10 - 25 % Gewichts-%, bezogen auf das Gewicht der gesamten Zusammensetzung. Der Anteil des Harnstoffderivats beträgt vorteilhaft 5 - 50 Gewichts-%, vorzugsweise 15 - 30 Gewichts-%, bezogen auf das Gewicht des Thixotropiermittels **C**.

Die erfindungsgemässe Zusammensetzung enthält weiterhin mindestens einen Härter **D** für Epoxidharze, welcher durch erhöhte Temperatur aktiviert wird. Es handelt sich hierbei vorzugsweise um einen Härter, welcher ausgewählt ist aus der Gruppe Dicyandiamid, Guanamine, Guanidine, Aminoguanidine und deren Derivate. Weiterhin sind katalytisch wirksame substituierte Harnstoffe wie Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden. Besonders bevorzugt ist Dicyandiamid.

Vorteilhaft beträgt der Gesamtanteil des Härters **D** 1 - 6 Gewichts-%, vorzugsweise 2 - 4 Gewichts-%, bezogen auf das Gewicht der gesamten Zusammensetzung.

In einer weiteren Ausführungsform enthält die erfindungsgemässe Zusammensetzung weiterhin mindestens ein Kern/Schalen-Polymer **E.** Bevorzugt besteht der Kern des Kern/Schalenpolymers aus einem Polymer mit einer Glasübergangstemperatur von -30°C oder tiefer und die Schale des Kern/Schalenpolymers aus einem Polymer mit einer Glasübergangstemperatur von 70°C oder höher. Beispiele für Polymere, die als Kernmaterial eingesetzt werden können, sind Polybutadien, Polyacrylsäure- und Polymethacrylsäureester sowie deren Co- oder Terpolymere mit Polystyrol, Polyacrylnitril oder Polysulfid. Vorzugsweise enthält das Kernmaterial Polybutadien oder Polybutylacrylat. Beispiele für Schalenpolymere sind Polystyrol, Polyacrylnitril, Polyacrylat- und -methacrylatmono-, -co- oder -terpolymere oder Styrol/-Acrylnitril/Glycidylmethacrylat-Terpolymere. Vorzugsweise wird Polymethylmethacrylat als Polymer für die Schalen eingesetzt. Die Grösse solcher Kern/Schalenpolymere beträgt zweckmässig 0.05 - 30 µm, vorzugsweise 0.05 - 15 µm. Insbesondere gelangen Kern/Schalenpolymere mit einer Grösse von kleiner als 3 µm zur Anwendung. Bevorzugt werden Kern/Schalenpolymere eingesetzt, die einen Kern aus Polybutadien oder Polybutadien/Polystyrol enthalten. Dieses Kernmaterial ist vorzugsweise teilvernetzt. Weitere Kernmaterialien sind Polyacrylate und -methacrylate, insbesondere Polyacrylsäure- und Polymethacrylsäureester sowie deren Co- oder Terpolymere.

Die Schale besteht vorzugsweise aus Polymeren auf der Basis von Methylmethacrylat, Methacrylsäurecyclohexylester, Acrylsäurebutylester, Styrol, Methacrylnitril.

Kommerziell erhältliche Produkte von Kern/Schalenpolymeren sind beispielsweise F-351 (Zeon Chemicals), Paraloid und Acryloid (Röhm und Haas), Blendex (GE Speciality Chemicals) und ähnliche.

Vorteilhaft beträgt der Gesamtanteil des Kern/Schalen-Polymers **E** 3-20 Gewichts-%, vorzugsweise 5 - 12 Gewichts-%, bezogen auf das Gewicht der gesamten Zusammensetzung.

In einer bevorzugten Ausführungsform enthält die Zusammensetzung zusätzlich mindestens einen Füllstoff **F**. Bevorzugt handelt es sich hierbei um Glimmer, Talk, Kaolin, Wollastonit, Feldspat, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 5 - 30 Gewichts-%, vorzugsweise 10 - 25 Gewichts-%, bezogen auf das Gewicht der gesamten Zusammensetzung.

In einer weiteren bevorzugten Ausführungsform enthält die Zusammensetzung zusätzlich mindestens einen epoxidgruppentragenden Reaktiwerdünner **G**. Bei diesen Reaktiwerdünnern **G** handelt es sich insbesondere um:
- Glycidylether von monofunktionellen gesättigten oder ungesättigten, verzweigten oder unverzweigten, zyklischen oder offenkettigen C4 - C30 Alkoholen, z.B. Butanolglycidylether, Hexanolglycidylether, 2-Ethylhexanolglycidylether, Allylglycidylether, Tetrahydrofurfuryl- und Furfurylglycidylether etc.
- Glycidylether von difunktionellen gesättigten oder ungesättigten, verzweigten oder unverzweigten, zyklischen oder offenkettigen C2 - C30 Alkoholen, z.B Aethylenglykol-, Butandiol-, Hexandiol-, Oktandioldigylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol etc.
- Glycidylether von Phenol- und Anilinverbindungen wie Phenylglycidylether, Kresolglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Tertiäre Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycoldiglycidylether etc.

Besonders bevorzugt sind Hexandioldiglycidylether, Polypropylenglycoldiglycidylether und Polyethylenglycoldiglycidylether.

Vorteilhaft beträgt der Gesamtanteil des epoxidgruppentragenden Reaktivverdünner **G** 1 - 7 Gewichts-%, vorzugsweise 2 - 6 Gewichts-%, bezogen auf das Gewicht der gesamten Zusammensetzung.

Die Verwendung der Zusammensetzung als einkomponentige Klebstoffe hat sich als besonders erfolgreich gezeigt. Insbesondere sind hiermit hitzehärtende einkomponentige Klebstoffe realisierbar, die sich sowohl durch eine hohe Schlagzähigkeit als auch durch einen hohe Glasübergangstemperatur auszeichnen. Solche Klebstoffe werden für das Verkleben von hitzestabilen Materialien benötigt. Unter hitzestabilen Materialien werden Materialien verstanden, welche bei einer Aushärtetemperatur von 120 - 220 °C, vorzugsweise 150 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl und nachträglich phosphatierter Stahl, sowie Aluminium insbesondere in den im Autobau typischerweise vorkommenden Varianten.

Mit einem Klebstoff basierend auf einer erfindungsgemässen Zusammensetzung kann vor allem die gewünschte Kombination von hoher Crashfestigkeit und hoher Einsatztemperatur erreicht werden.

Ein solcher Klebstoff wird mit den zu verklebenden Materialien kontaktiert und typischerweise bei einer Temperatur von 120 - 220 °C, vorzugsweise 150 - 200°C, ausgehärtet.

Selbstverständlich können neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders naheliegend sind verwandte Anwendungen in Transportmittelbau wie Schiffe, Lastwagen, Busse oder Schienenfahrtzeuge oder im Bau von Gebrauchsgütern wie beispielsweise Waschmaschinen.

In einer speziellen Weise sind auch Schmelzklebstoffe auf der Basis der erfindungsgemässen Zusammensetzung realisierbar. Hierbei werden die beim Epoxid-Addukt entstehenden Hydroxygruppen mit Isocyanatgruppen bzw. Isocyanatprepolymer umgesetzt. Dadurch wird die Viskosität erhöht, und eine Heissapplikation erforderlich.

### Beispiele

Im folgenden sind einige Beispiele aufgezeigt, welche die Erfindung weiter veranschaulichen, den Umfang der Erfindung aber in keiner Weise beschränken sollen. Die in den Beispielen verwendeten Rohstoffe sind wie folgt:

| **Verwendete Rohstoffe** | **Lieferant** |
|---|---|
| Dimerisierte C18-Fettsäure (Pripol 1013) | Uniquema |
| Adipinsäure | BASF |
| 2,2-Bis(4-hydroxyphenyl)propan | Fluka AG |
| Bis(4-hydroxyphenyl)sulfon | Fluka AG |
| Bisphenol-A-diglycidylether (=DGEBA) | Vantico |
| Polypropylenglycol-diglycidylether (ED-506) | Asahi-Denka Kogyo |
| Dicyandiamid (=Dicy) | Degussa |
| Polypropylen-etherpolyol (M_{w}=2000 g/mol) | Bayer |
| Isophoron-diisocyanat (=IPDI) | Degussa-Hüls |
| Caprolactam | EMS Chemie |
| N-Butylamin | BASF |
| 4,4'-Diphenyl-methylen-diisocyanat (=MDI) | Bayer |
| Kern/Schale-Polymer (F-351) | Zeon |
| Triphenylphosphin | Fluka |
| Dibutyl-Zinn-Dilaurat | Witco Europe |

Allgemeine Herstellung für Herstellung des Epoxidaddukts **B** und seiner Mischung mit **A** (=**A/B**-Vormischung):

### A/B-Vormischung VM1

Bei 110°C wurden unter Vakuum und Rühren 123.9 g einer dimeren Fettsäure, 1.1 g Triphenylphosphin sowie 57.3 g Adipinsäure mit 658 g eines flüssigen DGEBA-Epoxidharzes mit einem Epoxidgehalt von 5.45 eq/kg 5 Stunden lang umgesetzt, bis eine konstante Epoxidkonzentration von 2.85 eq/kg erreicht war. Nach dem Ende der Reaktion wurden dem Reaktionsgemisch zusätzlich 118.2 g flüssigen DGEBA-Epoxidharzes zugegeben.

Es wurden im weiteren andere Mischungen VM2 bis VM4 hergestellt. Dabei wurde die Adipinsäure durch verschiedene aromatische Alkohole in der Art ersetzt, dass ein theoretisch gleicher Epoxidgehalt des Bindemittels von 2.80 - 2.95 eq/kg erreicht wurde:

### A/B-Vormischung VM2

Bei 110°C wurden unter Vakuum und Rühren 123.9 g einer dimeren Fettsäure, 1.1 g Triphenylphosphin sowie 95.0 g 2,2-Bis(4-hydroxyphenyl)propan (= Bisphenol-A) mit 658 g eines flüssigen DGEBA-Epoxidharzes mit einem Epoxidgehalt von 5.45 eq/kg 5 Stunden lang umgesetzt, bis eine konstante Epoxidkonzentration von 2.95 eq/kg erreicht war. Nach dem Ende der Reaktion wurden dem Reaktionsgemisch zusätzlich 118.2 g flüssigen DGEBA-Epoxidharzes zugegeben.

### A/B-Vormischung VM3

Bei 110°C wurden unter Vakuum und Rühren 123.9 g einer dimeren Fettsäure sowie 28.3 g Adipinsäure, 1.1 g Triphenylphosphin und 47.3 g Bis(4-hydroxyphenyl)sulfon mit 658 g eines flüssigen DGEBA-Epoxidharzes mit einem Epoxidgehalt von 5.45 eq/kg 5 Stunden lang umgesetzt, bis eine konstante Epoxidkonzentration von 2.85 eq/kg erreicht war. Nach dem Ende der Reaktion wurden dem Reaktionsgemisch zusätzlich 118.2 g flüssigen DGEBA-Epoxidharzes zugegeben.

### A/B-Vormischung VM4

Bei 110°C wurden unter Vakuum und Rühren 123.9 g einer dimeren Fettsäure, 1.1 g Triphenylphosphin sowie 71.3 g Bis(4-hydroxyphenyl)sulfon mit 658 g eines flüssigen DGEBA-Epoxidharzes mit einem Epoxidgehalt von 5.45 eq/kg 5 Stunden lang umgesetzt, bis eine konstante Epoxidkonzentration von 2.82 eq/kg erreicht war. Nach dem Ende der Reaktion wurden dem Reaktionsgemisch zusätzlich 118.2 g flüssigen DGEBA-Epoxidharzes zugegeben.

### Thixotropiermittel C

Das Thixotropiermittel **C** wurde gemäss Patentanmeldung EP 1 152 019 A1 in einem blockierten Prepolymer mit oben erwähnten Rohstoffen hergestellt:

### Trägermaterial: Blockiertes Polyurethanprepolymer:

600.0 g eines Polyetherpolyols (2000 g/mol; OH-Zahl 57 mg/g KOH) wurde in Gegenwart von 0.08 g Dibbutyl-Zinn-Dilaurat unter Vakuum und Rühren bei 90°C mit 140.0 g IPDI zum Isocyanat-terminierten Prepolymer umgesetzt, bis der Isocyanatgehalt konstant blieb. Anschliessend wurden die freien Isocyanatgruppen mit Caprolactam (2% Überschuss) blockiert.

### Harnstoffderivat (HSD1) in blockiertem Polyurethanprepolymer:

Unter Stickstoff und leichtem Wärmen wurden 68.7 g MDI-Flocken in 181.3 g des oben beschriebenen blockierten Prepolymeres eingeschmolzen. Danach wurden während zwei Stunden unter Stickstoff und schnellem Rühren 40.1 g N-Butylamin gelöst in 219.9 g des oben beschriebenen blockierten Prepolymers zugetropft. Nach Beendigung der Zugabe der Aminlösung wurde die weisse Paste für weitere 30 Minuten weitergerührt. So wurde nach dem Abkühlen eine weisse, weiche Paste erhalten, welche einen freien Isocyanatgehalt von < 0.1% aufwies (Anteil Harnstoffderivat ca. 21%).

Allenfalls kann zu dieser Mischung noch weiteres Trägermaterial zugegeben werden. Zum Beispiel wurde für die Beispiele nochmals 4 g Trägermaterial (=Block. Prepolymer) zugegeben.

### Klebstoff-Formulierungen

Es wurden diverse Klebstoffzusammensetzungen gemäss Tabelle 1 hergestellt. Die Klebstoffe wurden nach Applikation bei 50°C während 30 Minuten im Ofen bei 180°C ausgehärtet. Alle Prüfungen erfolgten erst nach Abkühlung des Klebstoffes auf Raumtemperatur.

### Prüfmethoden:

### Glasüberganastemperatur Tg (DIN EN ISO 6721-2/DIN EN 61006)

Die Probekörper mit den Massen 50 x 10 mm wurden aus einer 2 mm dicken Klebstoffplatte welche 30 Minuten bei 180°C zwischen 2 Teflonfolien gehärtet wurde, ausgestanzt,. Messung: Oszillation 1Hz, Temperaturbereich-50 - +150°C, Heizrate 2 K/Min. Die Glasübergangstemperatur Tg wurde beim Maximum der Kurve des mechanischen Verlustfaktors (Tangens δ) festgelegt.

### Zugscherfestigkeit ZSF (DIN EN 1465)

Die Probekörper wurden mit elektrolytisch verzinktem Stahl (eloZn) mit den Massen 100 x 25 x 0.8mm hergestellt, dabei betrug die Klebfläche 25 x 10mm bei einer Schichtdicke von 0.3mm. Gehärtet wurde 30 Min. bei 180°C. Die Zuggeschwindigkeit betrug 10mm/Min.

### Impact Peel (ISO 11343)

Die Probekörper wurden mit elektrolytisch verzinktem Stahl (eloZn) mit den Massen 90 x 25 x 0.8mm hergestellt, dabei betrug die Klebfläche 25 x 30mm bei einer Schichtdicke von 0.3mm. Gehärtet wurde 30 Min. bei 180°C. Die Schlaggeschwindigkeit betrug 2 m/s.

### Resultate

Die Resultate der Klebstoffformulierungen in Tabelle 1 zeigen, dass mit den erfindungsgemässen Zusammensetzungen die Kombination von hoher Schlagzähigkeit, hoher Glasübergangstemperatur und hoher Festigkeit erreicht werden kann. Die nicht erfindungsgemässen Beispiele 1 und 7 zeigen, verglichen mit den Beispielen 2 und 6, besonders deutlich den positiven Einfluss des Thixotropiermittels, respektive des Harnstoffderivates, auf die Schlagzähigkeit. Die Beispiele 2 bis 6 zeigen den Einfluss des verwendeten Epoxid-Adduktes sowie, dass gleichzeitig eine Erhöhung der Schlagzähigkeit und ein Anstieg des Tg durch die Erfindung realisiert werden kann, während die Zugscherfestigkeit unverändert bleibt. Beispiele 9 und 10, im Vergleich mit den Beispielen 2 und 6, zeigen, dass die gewünschten Eigenschaften unabhängig davon, ob die Zusammensetzung gefüllt oder ungefüllt ist, erreicht werden können. Beispiele 8 und 6 zeigen, dass die Anwesenheit eines Kern/Schalenpolymers einen positiven, wenn aber auch im Vergleich zum Thixotropiermittel, respektive des Harnstoffderivates, kleineren Einfluss auf die Schlagzähigkeit hat.

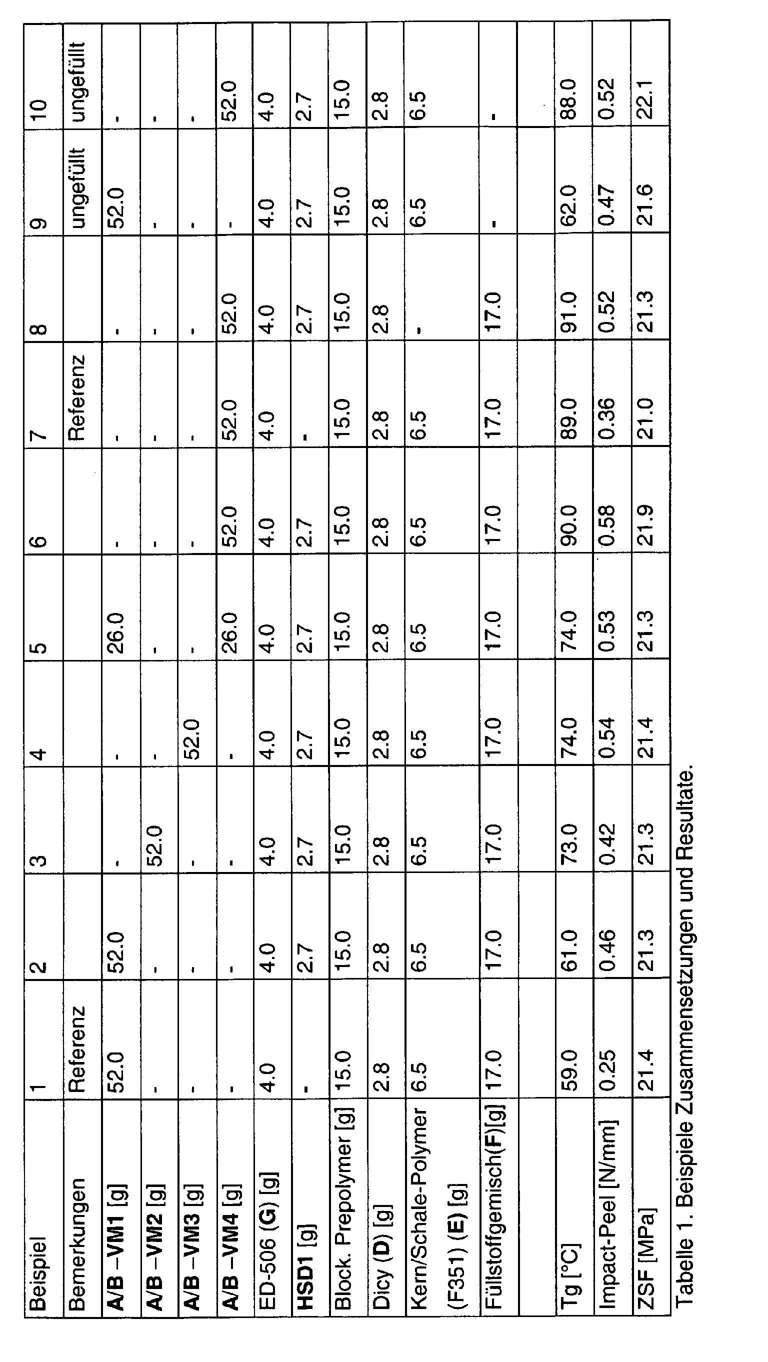

## Patentansprüche

1. Zusammensetzung umfassend
mindestens ein Epoxidharz **A** mit durchschnittlich mehr als einer Epxidgruppe pro Molekül;
mindestens ein Epoxid-Addukt **B** mit je durchschnittlich mehr als einer Epoxidgruppe pro Molekül;
mindestens ein Thixotropiermittel **C**, auf Basis von Harnstoffderivat in einem nicht-diffundierenden Trägermaterial;
mindestens einen Härter **D** für Epoxidharze, welcher durch erhöhte Temperatur aktiviert wird.

2. Zusammensetzung gemäss Anspruch 1 **dadurch gekennzeichnet, dass** das Epoxidharz **A** ein Flüssigharz, insbesondere ein Bisphenol-A-diglycidylether, Bisphenol-F-diglycidylether oder Bisphenol-A/F-diglycidylether ist.

3. Zusammensetzung gemäss Anspruch 1 oder 2, **dadurch gekennzeichnet, dass** das Epoxid-Addukt **B**
ein Epoxid-Adduktes **B1**, welches aus mindestens einer Dicarbonsäure und mindestens einem Diglycidylether erhältlich ist; und gegebenenfalls kombiniert mit
einem Epoxid-Adduktes **B2**, welches aus mindestens einem Bis(aminophenyl)sulfon-lsomeren oder mindestens einem aromatischen Alkohol und mindestens einem Diglycidylether erhältlich ist;
ist.

4. Zusammensetzung gemäss Anspruch 3, **dadurch gekennzeichnet, dass** für die Herstellung des Epoxid-Addukt **B1** als Dicarbonsäure eine dimere Fettsäure, insbesondere mindestens einer dimeren C4 - C20 Fettsäure, und als Diglycidylether Bisphenol-A-diglycidylether, Bisphenol-F-diglycidylether oder Bisphenol-A/F-diglycidylether verwendet wird .

5. Zusammensetzung gemäss einem der Ansprüche 3 oder 4, **dadurch gekennzeichnet, dass** für die Herstellung des Epoxid-Addukt **B2** ein aromatischer Alkohol, ausgewählt aus der Gruppe 2,2-Bis(4-hydroxyphenyl)-propan, Bis(4-hydroxyphenyl)methan, Bis(4-hydroxyphenyl)sulfon, Hydrochinon, Resorcin, Brenzkatechin, Naphthohydrochinon, Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan sowie alle Isomeren der vorgenannten Verbindungen oder und als Diglycidylether Bisphenol-A-diglycidylether, Bisphenol-F-diglycidylether oder Bisphenol-A/F-diglycidylether verwendet wird.

6. Zusammensetzung gemäss einem der vorhergehenden Ansprüche, **dadurch gekennzeichnet, dass** das Epoxid-Addukt **B** ein Molekulargewicht von 700 - 6000 g/mol, vorzugsweise 900 - 4000 g/mol, insbesondere 1000 - 3300 g/mol aufweist.

7. Zusammensetzung gemäss einem der vorhergehenden Ansprüche, **dadurch gekennzeichnet, dass** das Trägermaterial des Thixotropiermittel **C** ein blockiertes Polyurethanpräpolymer ist.

8. Zusammensetzung gemäss Anspruch 7, **dadurch gekennzeichnet, dass** das Harnstoffderivat im Thixotropiermittel **C** das Produkt der Umsetzung eines aromatischen monomeren Diisocyanaten, insbesondere 4,4'-Diphenyl-methylen-diisocyanat, mit einer aliphatischen Aminverbindung, insbesondere Butylamin ist.

9. Zusammensetzung gemäss einem der vorhergehenden Ansprüche, **dadurch gekennzeichnet, dass** der Härter **D**, ein latenter Härter aus der Gruppe Dicyandiamid, Guanamine, Guanidine, und Aminoguanidine ist.

10. Zusammensetzung gemäss einem der vorhergehenden Ansprüche, **dadurch gekennzeichnet, dass** der Gesamtanteil von Epoxidharz **A** und Epoxid-Addukt **B** in der Summe 20 - 70 Gewichts-%, vorzugsweise 35-65 Gewichts-%, bezogen auf das Gewicht der gesamten Zusammensetzung, beträgt.

11. Zusammensetzung gemäss einem der vorhergehenden Ansprüche, **dadurch gekennzeichnet, dass** der Gesamtanteil von Epoxidharz **A** 12-50 Gewichts-%, vorzugsweise 17 - 45 Gewichts-%, bezogen auf die Gewichtsumme von **A+B,** beträgt.

12. Zusammensetzung gemäss einem der vorhergehenden Ansprüche, **dadurch gekennzeichnet, dass** der Gesamtanteil des Thixotropiermittels **C** 5 - 40 Gewichts-%, vorzugsweise 10 - 25 % Gewichts-%, bezogen auf das Gewicht der gesamten Zusammensetzung, beträgt.

13. Zusammensetzung gemäss Anspruch 12, **dadurch gekennzeichnet, dass** der Anteil des Harnstoffderivats 5- 50 Gewichts-%, vorzugsweise 15 - 30 Gewichts-%, bezogen auf das Gewicht des Thixotropiermittels **C**, beträgt.

14. Zusammensetzung gemäss einem der vorhergehenden Ansprüche, **dadurch gekennzeichnet, dass** der Gesamtanteil des Härters **D** 1 - 6 Gewichts-%, vorzugsweise 2 - 4 Gewichts-%, bezogen auf das Gewicht der gesamten Zusammensetzung, beträgt.

15. Zusammensetzung gemäss einem der vorhergehenden Ansprüche, **dadurch gekennzeichnet, dass** zusätzlich mindestens ein Kern/Schalen-Polymer **E** vorhanden ist.

16. Zusammensetzung gemäss Anspruch 15, **dadurch gekennzeichnet, dass** der Gesamtanteil des Kern/Schalen-Polymers **E** 3 - 20 Gewichts-%, vorzugsweise 5 - 12 Gewichts-%, bezogen auf das Gewicht der gesamten Zusammensetzung, beträgt.

17. Zusammensetzung gemäss einem der vorhergehenden Ansprüche, **dadurch gekennzeichnet, dass** der Kern des Kern/Schalen-Polymer **E** aus einem Polymer mit einer Glasübergangstemperatur von -30°C oder tiefer besteht und die Schale des Kern/Schalen-Polymers **E** aus einem Polymer mit einer Glasübergangstemperatur 70°C oder höher besteht.

18. Zusammensetzung gemäss einem der vorhergehenden Ansprüche, **dadurch gekennzeichnet, dass** zusätzlich mindestens ein Füllstoff **F** vorhanden ist.

19. Zusammensetzung gemäss Anspruch 18, **dadurch gekennzeichnet, dass** der Gesamtanteil des Füllstoffs **F** 5 - 30 Gewichts-%, vorzugsweise 10-25 Gewichts-%, bezogen auf das Gewicht der gesamten Zusammensetzung, beträgt.

20. Zusammensetzung gemäss einem der vorhergehenden Ansprüche, **dadurch gekennzeichnet, dass** zusätzlich mindestens ein epoxidgruppentragender Reaktivverdünner **G** vorhanden ist.

21. Zusammensetzung gemäss einem der vorhergehenden Ansprüche, **dadurch gekennzeichnet, dass** die mittels Wärme ausgehärtete Zusammensetzung eine Glasübergangstemperatur von mindestens 85°C aufweist.

22. Verfahren der Herstellung einer Zusammensetzung gemäss einem der Ansprüche 1 - 21, **dadurch gekennzeichnet, dass** in der Herstellung mindestens einen Adduktierungsschritt mit einem Diglycidylether durchgeführt wird.

23. Verwendung einer Zusammensetzung gemäss einem der Ansprüche 1-21 als einkomponentiger Klebstoff.

24. Verwendung gemäss Anspruch 23, **dadurch gekennzeichnet, dass** der Klebstoff für das Verkleben von hitzestabilen Materialien, insbesondere von Metallen, verwendet wird.

25. Verwendung gemäss Anspruch 23 oder 24, **dadurch gekennzeichnet, dass** der Klebstoff als Rohbauklebstoff im Automobilbau verwendet wird.

26. Verwendung des Thixotropiermittels **C** auf Basis von Harnstoffderivat in einem nicht-diffundierenden Trägermaterial als Mittel zur Erhöhung der Schlagzähigkeit.

27. Verwendung des Thixotropiermittels **C** gemäss Anspruch 26, **dadurch gekennzeichnet, dass** das Trägermaterial **C** ein blockiertes Polyurethanpräpolymer ist.

28. Verwendung des Thixotropiermittels **C** gemäss Anspruch 26 oder 27, **dadurch gekennzeichnet, dass** das Harnstoffderivat das Produkt der Umsetzung eines aromatischen monomeren Diisocyanaten, insbesondere 4,4'-Diphenyl-methylen-diisocyanat, mit einer aliphatischen Aminverbindung, insbesondere Butylamin, ist.

29. Verwendung des Thixotropiermittels **C** gemäss einem der Ansprüche 26-28, **dadurch gekennzeichnet, dass** der Anteil des Harnstoffderivats 5 - 50 Gewichts-%, vorzugsweise 15 - 30 Gewichts-%, bezogen auf das Gewicht des Thixotropiermittels **C**, beträgt.

30. Verfahren zum Verkleben von hitzestabilen Materialien, insbesondere von Metallen, **dadurch gekennzeichnet, dass** diese Materialien mit einer Zusammensetzung gemäss einem der Ansprüche 1 - 21 kontaktiert werden und einen Schritt des Aushärtens bei einer Temperatur von 120 - 220 °C, vorzugsweise 150 - 200°C umfasst.
